# EUROPEAN PATENT SPECIFICATION

(11) **EP 1 816 726 B1**
(45) Date of publication and mention of the grant of the patent: **18.11.2009**
(21) Application number: 07100355.2
(22) Date of filing: 10.01.2007
(51) Int. Cl.: H02K 5/136

(54) **Explosion-proof electrical machine.**
Elektrische Maschine mit einer druckfesten Kapselung
Machine électrique tournante à enveloppe antidéflagrante

(30) Priority: 03.02.2006 IT MI20060191
(43) Date of publication of application: 08.08.2007
(73) Proprietor: ABB S.p.A., 20124 Milano (IT)
(72) Inventor: Bodini, Piero, 20010 Vittuone (MI) (IT); Osnaghi, Tiziano, 20011 Battuello frazione Corbetta (MI) (IT); Leone, Ivano, 20056 Trezzo sull'Adda (MI) (IT)
(74) Representative: Giavarini, Francesco

(56) References cited:
- DE-C- 817 475
- JP-A- 57 095 149
- GREINER H: "PROTEZIONE ANTIACCENSIONE PER MOTORI TRIFASE ANTIDEFLAGRANTI" ORGANI DI TRASMISSIONE, TECNICHE NUOVE. MILANO, IT, vol. 29, no. 6, June 1998 (1998-06), pages 114-122, XP000755345 ISSN: 0030-4905

## Description

The present invention relates to a medium or high voltage explosion-proof electrical machine, i.e. for operating voltages greater than 1kV; more specifically, the present invention relates to an explosion-proof rotary electrical machine having improved structure and characteristics, in particular with regard to the configuration of the enclosure thereof.

As known, explosion-proof electrical machines, whether motors or generators, are apparatus specifically designed and configured for use in specific hazardous areas, for example, installations in the oil, chemical, petrochemical, gas and similar sectors.

These hazardous areas are specifically classified in areas according to various international standards and regulations which take into account the probable continuous or occasional presence of flammable substances in operating sites; on the basis of this classification further sub-classes or groups are established as a function firstly of the specific type of installation, i.e. coal mining or surface industry, and secondly according to the type of flammable substances present, in particular with regard to the presence of specific vapors or gases, such as ethylene, acetylene, hydrogen, mixtures, etc..

Where the presence of these flammable substances is not permanent or, in any case, does not occur for very long times, regulations authorize the use of the aforesaid explosion-proof electrical machines, called so because they are designed to ensure that an explosion taking place therewithin, triggered, for example, by a short circuit, is contained therein, also preventing any flames from propagating to the outside.

Therefore, beside the usual active parts of the machine, typically the stator and the rotor, the enclosure plays a fundamental role in the construction of these machines, as it is allocated the task of withstanding an internal explosion without being subject to any permanent deformation and preventing flames from propagating towards the outside environment.

These enclosures must therefore have an *ad hoc* structure which, besides providing the mechanical performances generally required of all rotary electrical machines, such as sufficient resistance to torsional stresses, low levels of vibration, etc., must pass particularly strict specific certification tests; in particular, in a typical test the enclosure is sealed and filled with liquid, generally water, which is taken to high pressure. In these conditions the structure of the enclosure must only become elastically deformed and under no circumstances must allow the liquid to escape to the outside.

Currently, although adequately accomplishing the functions they are called upon to perform, in specific circumstances, in particular when solutions with improved performances are desirable, known explosion-proof electrical machines have aspects that are not entirely satisfactory and some technical drawbacks worthy of further improvements.

In particular, a typical enclosure structure currently has a pair of hollow metal cylinders positioned coaxially along the axis of the machine and are structurally coupled, for example by means of frames and stiffening ribs. Housed in the cavity of the inner cylinder, among other things, are the rotor and the stator which is fixed to said inner cylinder; housed in the hollow space between the two coaxial cylinders are the tubes of one or more heat exchanger which, as intuitable, plays an essential role in the correct and safe operation of the machine. An example of this typical enclosure is described in the patent application JP 57095149.

Over the years the market has continually requested the supply of machines with the highest possible performance, in particular in terms of speed and power, which has led to the use of larger active parts, rotor and stator; naturally, these machines with "increased performance" have at the same time required sturdier and stronger enclosures, as well as more powerful and efficient cooling systems. Consequently, it has been necessary also to increase the dimensions of heat exchangers, increasing the number of tubes required.

To address this need, one solution used has been to directly build machines of larger size, increasing not only the longitudinal extension, but also and above all the height of the machine defined as the distance between its axis and a supporting surface thereof

For manufacturers, the use of machines of different size had a first and unavoidable consequence of having to subject the new versions to certification tests which, as previously mentioned, are particularly restrictive and probative. Moreover, this solution has in any case caused a series of additional problems as it was necessary to build heavier and bulkier machines with a consequent impact on production costs. Finally, the use of machines of increased height often causes problems of dimensional compatibility with the components to which the machine is to be connected; for example, if the user has already installed a pump at a certain height, the supply of a machine with higher power and increased height entails modifications to the installation site resorting, for example, to the use of supporting blocks, such as beams and the like, which allow the two components to be aligned.

Another known solution instead uses an enclosure having an outer cylindrical body with increased diameter so as to increase the space available for the heat exchanger; this cylinder is then cut in the area corresponding to the supporting block and closed with flat horizontal walls so that the height of the machine is not modified; nonetheless, this solution increases the weight of the structure and also requires the use of specific frames and stiffening ribs with consequent impact on the costs and also on the overall reliability of the machine.

The main task of the present invention is to produce an explosion-proof electrical machine capable of overcoming the aforesaid drawbacks, and in particular, compared to prior art solutions, which makes it possible to obtain improved performances given the same size with a relatively simple structure which ensures high standards and reliability.

The present invention refers to an explosion-proof electrical machine as defined in the independent claim 1. Further embodiments of the invention are claimed in the dependent claims.

Further characteristics and advantages of the invention will be more apparent from the description of preferred, but non-exclusive, embodiments of the explosion-proof electrical machine, illustrated by way of a non-limiting example in the accompanying drawings, wherein:
Figure 1 is a front section schematically illustrating the explosion-proof electrical machine according to the invention;
Figure 2 is a side view of the explosion-proof electrical machine according to the invention;
Figure 3 is a detailed view of the circled part in Figure 1.

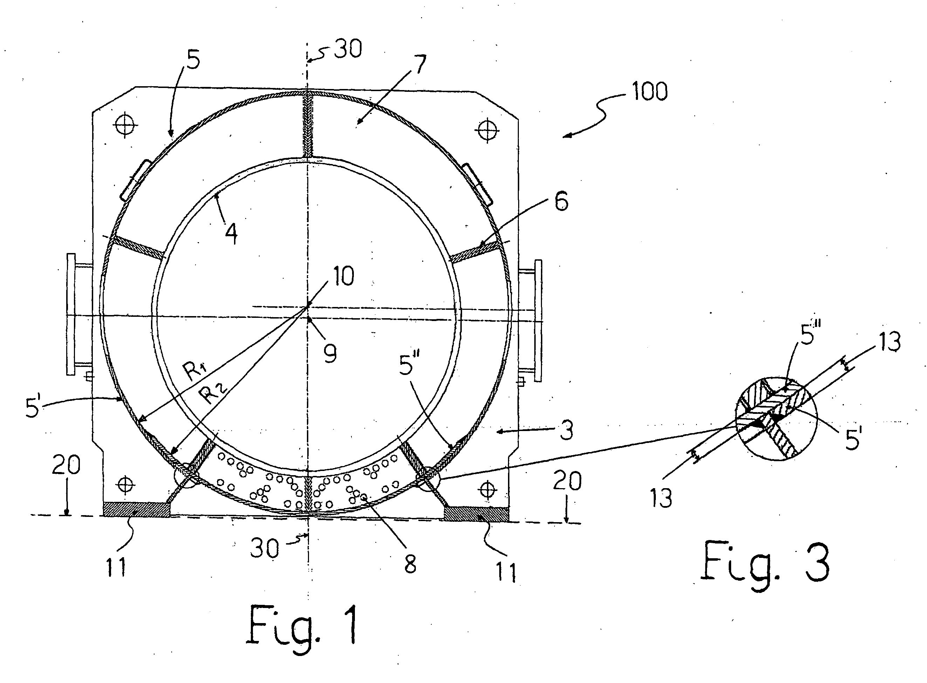

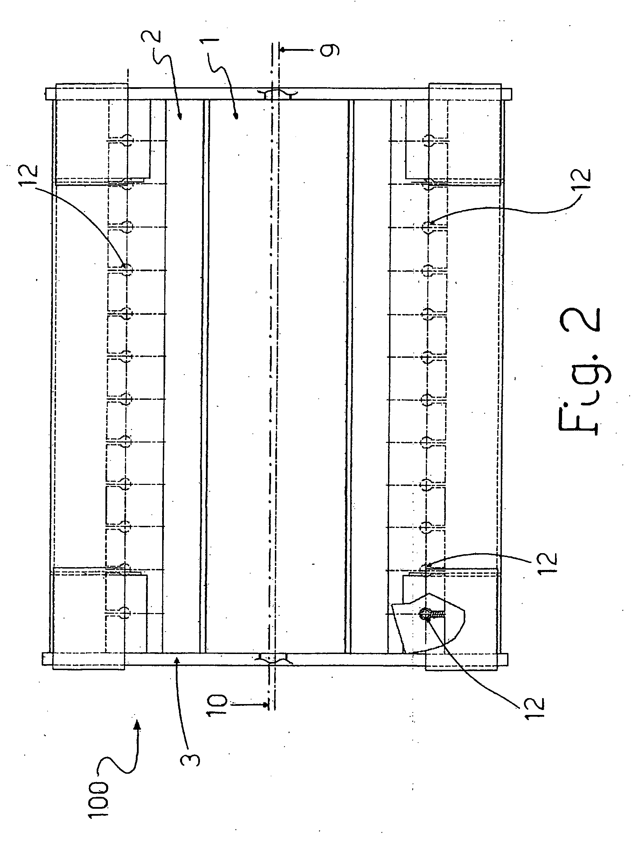

With reference to Figures 1 and 2, the explosion-proof electrical machine according to the invention, indicated as a whole with the reference numeral 100, comprises a rotor 1 and a stator 2 of known shape and assembly (represented schematically only in Figure 2 for greater illustrative clarity), and an enclosure 3 which is configured to form as a whole an explosion-proof casing.

In particular, the enclosure 3 comprises, in addition to a series of components - such as the flameproof seals not described in detail as they are not part of the inventive concept and in any case with a form known *per se -* a first hollow body 4 housed inside which are the rotor 1 and the stator 2; and a second hollow body 5 (or jacket) positioned around the first hollow body 4; the stator 2 is connected to the inner surface of the first hollow body 4, while the two hollow bodies 4 and 5 are connected structurally to each other along the longitudinal extension of the machine by means of a series of elements, such as frames 6 and stiffening ribs, so that therebetween there is defined a hollow space 7 through which the tubes 8 of the heat exchangers pass (only part of which are shown in Figure 1 for illustrative simplicity).

Advantageously, in the machine 100 according to the invention, the first hollow body 4 has a preferably regular substantially cylindrical tubular shape, i.e. with a circular cross section, with respect to a first axis of reference 9 substantially coincident with the geometrical axis of the machine along which the shaft thereof is positioned; in turn, the second hollow body 5 has at least a portion 5' with cylindrical configuration with respect to a second axis of reference 10; in particular, the second hollow body 5 is positioned around the first cylindrical body 4 so that the two respective axes of reference 10 and 9, which in practice form the relative axes of cylindrical symmetry, are not coincident, i.e. are not coaxial with each other.

As shown in Figure 1, the second hollow body 5 is positioned around the first hollow body with the second axis of reference 10 which, with respect to a bearing plane of the machine indicated in Figure 1 with the reference numeral 20, is positioned superior to the first axis of reference 9 and substantially aligned therewith along a vertical direction 30.

As illustrated in Figure 1, the second hollow body 5 comprises a first portion 5' and a second portion 5" operatively connected to each other and both having a configuration with cylindrical configuration, preferably with respect to the same common axis of reference or symmetry 10.

More specifically, the second hollow body 5 is advantageously composed of two sectors of hollow cylindrical tube the respective cross sections of which are both formed by an arc of circle with respect to said axis of symmetry 10. The first portion 5' and the second portion 5" have radii, R₁ and R₂ respectively, different from each other in relation to the axis of reference 10.

Moreover, said two portions 5' and 5" have substantially the same thickness 13 as each other; preferably, this thickness is substantially equal to the difference between the radii R₁ and R₂ of said first and second portions 5' and 5".

In this way it is possible to use the same plate to obtain the two portions with consequent benefit in terms of production costs; for example, a plate made of S275 steel can be used.

The first portion 5' and the second portion 5" are connected to each other so that at least a section of the respective end edges are overlapped with each other, as shown, for example, in the circled area in Figure 1. In particular, as illustrated in Figures 1 and 3, the second portion 5" is preferably fixed inside the first portion 5', in an inferior area thereof with respect to the axis of reference 9 (or 10), in proximity to the feet (or block) 11 with which the machine rests on the bearing plane 20. Moreover, as illustrated in Figure 2, the first portion 5' has at least one through aperture 12 positioned at the level of at least one of the surface areas overlapped with the second portion 5"; preferably, on both of the overlapped areas a plurality of through apertures (or slots or holes) 12 are provided positioned along the longitudinal extension of the first portion 5'.

In this way the connection between the two portions 5' and 5" can advantageously be produced not only by fixing, i.e. by welding the two parts along the overlapped end edges as represented schematically in Figure 3, but also by welding at the level of the apertures 12 to increase the efficacy of the seal and the resistance of the seam areas to mechanical stress.

In practice, it has been seen how, due in particular to the innovative structure of its enclosure, the explosion-proof electrical machine according to the invention fully achieves the pre-established task providing a series of advantages with respect to prior art. In fact, in addition to the previously mentioned characteristics, the machine 100 is capable, with the same size, of offering improved functional performances, in particular in terms of power. More specifically, as the position of the outer jacket 5 has greater eccentricity with respect to the axis of the inner cylinder 4, the space intended to house the heat exchanger tubes is increased and becomes adequate to ensure correct heat exchange also in machines with increased performances. Moreover, production of the jacket 5 with the two cylindrical tubular portions 5' and 5" suitably connected to each other makes it possible to obtain a structure with optimized dimensions and shape, which is at the same time mechanically sturdy, stable and capable of offering higher levels of mechanical resistance, in particular concerning resistance to internal pressures.

Consequently, the height of the machine, i.e. the distance between the axis 9 thereof and the bearing plane 20, and consequently the size, is not altered and therefore only the longitudinal extension along the axis 9 thereof is modified. Consequently, the machine 100 according to the invention, although having suitable increased power as a function of the applicative requirements, does not require new certification tests, nor does it have any problems of dimensional compatibility with the components to which it is coupled in the applications.

The explosion-proof electrical machine thus conceived is susceptible to numerous modifications and variants within the scope of the appended claims. In practice, the type of materials within the scope of the foreseen applications described above, and the dimensions, can be any according to needs and to the state of the art.

## Claims

1. Explosion-proof electrical machine (100) comprising a rotor (1), a stator (2) and an enclosure (3), said enclosure (3) comprises a first hollow body (4) positioned around said rotor (1) and stator (2) and having a substantially cylindrical shape with respect to a first axis of reference (9), said enclosure (3) comprising a second hollow body (5) having at least a portion with cylindrical configuration with respect to a second axis of reference (10), said second hollow body (5) being positioned external to the first hollow body (4) with said first (9) and second axes of reference (10) not coincident with each other, said second hollow body (5) is positioned, with respect to a bearing surface of the machine, around said first hollow body (4) with the second axis (10) positioned superior to and substantially aligned with the first axis of reference (9) along a vertical direction, said second hollow body (5) comprises a first portion (5') and a second portion (5") connected to each other and both having a cylindrical configuration,
**characterized in that** said first (5') and second portions (5") are connected to each other so that at least a section of the respective end edges are overlapped with each other, said first portion (5') and second portion (5") with cylindrical configuration having different radii (R1,R2) from each other.

2. Explosion-proof electrical machine (100) according to claim 1, **characterized in that** said second portion (5") is fixed internally to said first portion (5') and in an inferior area thereof with respect to said second axis of reference (10).

3. Explosion-proof electrical machine (100) according to claim 1, **characterized in that** said first portion (5') has at least a through aperture positioned at the level of the area overlapped with the second portion.

4. Explosion-proof electrical machine (100) according to claim 1, **characterized in that** said first (5') and second portions (5") with cylindrical configuration have substantially the same thickness as each other.

5. Explosion-proof electrical machine (100) according to claim 4, **characterized in that** said thickness is substantially equal to the difference between the radii of said first and second portions.

## Patentansprüche

1. Explosionssichere elektrische Maschine (100), die einen Rotor (1), einen Stator (2) und ein Gehäuse (3) aufweist, wobei das Gehäuse (3) einen ersten Hohlkörper (4), der um den Rotor (1) und den Stator (2) herum positioniert ist, und eine im Wesentlichen zylindrische Form in Bezug auf eine Referenzachse (9) aufweist, wobei das Gehäuse (3) einen zweiten Hohlkörper (5) aufweist, der zumindest einen Bereich mit einer zylindrischen Konfiguration in Bezug auf eine zweite Referenzachse (10) aufweist, wobei der zweite Hohlkörper (5) außerhalb des ersten Hohlkörpers (4) positioniert ist, wobei die erste (9) und die zweite Referenzachse (10) nicht zusammenfallen, wobei der zweite Hohlkörper (5), in Bezug auf eine Lageroberfläche der Maschine, um den ersten Hohlkörper (4) positioniert ist, wobei die zweite Achse (10) zur ersten Referenzachse (9) über und im Wesentlichen mit derselben entlang einer vertikalen Richtung ausgerichtet angeordnet ist, wobei der zweite Hohlkörper (5) einen ersten Bereich (5') und einen zweiten Bereich (5 ") aufweist, die miteinander verbunden sind und beide eine zylindrische Konfiguration aufweisen,
**dadurch gekennzeichnet, dass** der erste (5') und der zweite Bereich (5 ") miteinander verbunden sind, so dass zumindest ein Abschnitt der jeweiligen Endkanten einander überschneiden, wobei der erste Bereich (5') und der zweite Bereich (5") mit der zylindrischen Konfiguration unterschiedliche Radien (R1, R2) zueinander aufweisen.

2. Explosionssichere elektrische Maschine (100) nach Anspruch 1, **dadurch gekennzeichnet, dass** der zweite Bereich (5 ") innen an dem ersten Bereich (5') und in Bezug auf die zweite Referenzachse (10) unterhalb derselben befestigt ist.

3. Explosionssichere elektrische Maschine (100) nach Anspruch 1, **dadurch gekennzeichnet, dass** der erste Bereich (5') zumindest eine Öffnung aufweist, die auf der Höhe der Fläche positioniert ist, die mit dem zweiten Bereich überlappt wird.

4. Explosionssichere elektrische Maschine (100) nach Anspruch 1, **dadurch gekennzeichnet, dass** der erste (5') und der zweite (5") Bereich mit einer zylindrischen Konfiguration im Wesentlichen die zueinander gleiche Dicke aufweisen.

5. Explosionssichere elektrische Maschine (100) nach Anspruch 4, **dadurch gekennzeichnet, dass** die Dicke im Wesentlichen gleich der Differenz zwischen den Radien des ersten und zweiten Bereichs ist.

## Revendications

1. Machine électrique antidéflagrante (100) comportant un rotor (1), un stator (2) et une enveloppe (3), ladite enveloppe (3) comportant un premier corps creux (4) positionné autour dudit rotor (1) et dudit stator (2) et présentant une forme sensiblement cylindrique par rapport à un premier axe de référence (9), ladite enveloppe (3) comportant un second corps creux (5) présentant au moins une partie ayant une configuration cylindrique par rapport à un second axe de référence (10), ledit second corps creux (5) étant positionné à l'extérieur du premier corps creux (4), lesdits premier (9) et second axes de référence (10) ne coïncidant pas l'un avec l'autre, ledit second corps creux (5) étant positionné, par rapport à une surface portante de la machine, autour dudit premier corps creux (4), le second axe (10) étant positionné au-dessus du et étant sensiblement aligné avec le premier axe de référence (9) suivant une direction verticale, ledit second corps creux (5) comportant une première partie (5') et une seconde partie (5") reliées l'une à l'autre et présentant toutes deux une configuration cylindrique,
**caractérisée en ce que** lesdites première (5') et seconde parties (5") sont reliées l'une à l'autre de sorte que sur au moins une section, les bords d'extrémité respectifs se chevauchent l'un l'autre, ladite première partie (5') et ladite seconde partie (5") de configuration cylindrique présentent des rayons (R1, R2) différents l'un de l'autre.

2. Machine électrique antidéflagrante (100) selon la revendication 1, **caractérisée en ce que** ladite seconde partie (5") est fixée à l'intérieur de ladite première partie (5') et dans une région inférieure de celle-ci par rapport audit second axe de référence (10).

3. Machine électrique antidéflagrante (100) selon la revendication 1, **caractérisée en ce que** ladite première partie (5') présente au moins une ouverture traversante positionnée au niveau de la région chevauchant la seconde partie.

4. Machine électrique antidéflagrante (100) selon la revendication 1, **caractérisée en ce que** lesdites première (5') et seconde parties (5") de configuration cylindrique ont sensiblement l'une et l'autre la même épaisseur.

5. Machine électrique antidéflagrante (100) selon la revendication 4, **caractérisée en ce que** ladite épaisseur est sensiblement égale à la différence entre les rayons desdites première et seconde parties.
